## Europäisches Patentamt
## European Patent Office
## Office européen des brevets

(11) Publication number: **0 158 404**
**B1**

(12) **EUROPEAN PATENT SPECIFICATION**

(45) Date of publication of patent specification: **04.07.90**

(21) Application number: **85200552.9**

(22) Date of filing: **10.04.85**

(51) Int. Cl.⁵: **A 01 F 15/14**

(54) Knotter trip mechanism.

(30) Priority: **12.04.84 US 599370**

(43) Date of publication of application:
**16.10.85 Bulletin 85/42**

(45) Publication of the grant of the patent:
**04.07.90 Bulletin 90/27**

(84) Designated Contracting States:
**DE FR GB**

(56) References cited:
**WO-A-83/00599
DE-B-1 095 044
DE-C- 217 053
DE-C- 296 340
DE-C- 804 616**

(73) Proprietor: **FORD NEW HOLLAND N.V.**
**Leon Claeysstraat 3a**
**B-8210 Zedelgem (BE)**

(72) Inventor: **Naaktgeboren, Adrianus**
**Vogelwikkestraat 7**
**B-8211 Veldegem (Zedelgem) (BE)**

(74) Representative: **Vandenbroucke, Alberic T.J.**
**et al**
**FORD NEW HOLLAND N.V. Leon Claeysstraat 3A**
**B-8210 Zedelgem (BE)**

Courier Press, Leamington Spa, England.

# Description

This invention relates generally to agricultural balers and, in particular, to knotter trip mechanisms for such balers.

In a conventional type of baler, a plunger reciprocates in a bale case to form crop material into rectangular bales. Tying mechanisms comprising needles and knotters are provided to tie several strands of binding material such as twine around the bales, and a trip mechanism is employed for automatically actuating the knotters when bales reach a desired length. Such trip mechanisms are disclosed in US—A—2.897.748 and GB—A—1.169.137.

Conventionally the knotter drive shaft controlling the operation of both the needles and the knotter mechanisms per se, is rotated at the same rotational speed as the plunger crank arm, whereby the knot tying cycle is completed only when the plunger is already retracting, or in other words, while the bale, which previously has been compressed in the bale chamber, is springing back, thereby resulting in the bale being of relatively low density as it issues from the bale chamber. This, in itself, results in low energy efficiency as crop material has to be compressed much harder to obtain a given density in the finished bale.

However, this characteristic eventually also may cause problems with the knot tying operation itself as knots may not hold firmly after completion, although it should be added that this problem is not really critical in conventional, so-called small rectangular balers.

The situation is different with the advent of so-called medium size and large rectangular balers operable to produce bales of hay weighing anywhere in the range of 200 up to 1000 kg, as opposed to conventional small balers which are operable to produce bales typically weighing in the range of only 20 to 30 kg. In such medium size and large square balers the problems just described and caused by the bales expanding in the bale case prior to the knotting cycles being completed, are much more outspoken. The springing back of crop material prior to the knotting cycle being completed is much more considerable whereby bales of relatively lower density are formed and whereby power inefficiency is much more serious. Also, the knot tying operation itself is much more often adversely affected resulting in frequent mistiesIt has already been proposed in the art, as appears from DE—B—1.095.044, to rotate the tying mechanism drive shaft at twice the rotational speed of the plunger crank arm. Others also have already proposed, as can be seen in DE—C—804.616, to rotate the tying mechanism main shaft during the tying cycle through only one half or even one third of a complete revolution. With both of these approaches the tying operation is completed in less than a complete reciprocating cycle of the plunger whereby the above described problems are greatly reduced.

However, these amended designs have caused another problem which is concerned with the timing of the operation of the tying mechanism with the plunger movement. As in conventional hay balers the knotter drive shaft is rotated at the same rotational speed as the plunger crank arm when the trip mechanism is tripped, timing of the knotter operation with the plunger movement is indeed very simple; the trip mechanism being operable to trip the knotter cycle always at precisely the same point in the plunger cycle, as is generally known in the art. Incorrect timing between the plunger movement and the knotting cycle would completely disturb and make ineffective the knotter operation as is generally known in the art. Unless special precautions are taken, such incorrect timing easily could occur in arrangements where the tying cycle is completed in less than a full reciprocating cycle of the plunger.

DE—C—217.053 already discloses means for timing the tying cycle with the movement of the plunger in the direction to compress crop material in the bale case. A bale length metering device is provided which is arranged to reposition an actuator member when a bale of sufficient length is accumulated in the bale case. When this repositioning has occurred, the plunger will actuate this actuator member upon its movement in the direction to compress crop material in the bale case. This, in turn, engages a clutch mechanism in the drive line to the tying mechanism and thus the triggering of the tying cycle is synchronized with the movement of the plunger in said direction. Incidentally, the clutch mechanism illustrated in DE—C—217.053 is very much different from the clutch mechanisms which conventionally are used in combination with the tying mechanisms on agricultural balers.

WO—A—8.300.599 on the other hand illustrates an arrangement for timing the tying operation with the position of a feeder mechanism. According to WO—A—8.300.599 a conventional single revolution clutch is provided in the drive line to the tying mechanism. The triggering of this clutch mechanism is controlled by a conventional bale length metering apparatus which is operatively coupled to a conventional tripping mechanism which, in turn, controls the position of a conventional pawl assembly which is part of the clutch mechanism. A locking apparatus is associated with the tripping mechanism and is disposed to prevent a tripping of this tripping mechanism by the bale length metering apparatus unless the feeder mechanism is in a predetermined position.

The present invention starts form a conventional tying mechanism with a drive line including a conventional clutch mechanism having a conventional pawl assembly, the position of which is controlled by a conventional trip mechanism coupled to a conventional bale length metering apparatus. Such a conventional arrangement is clearly illustrated in a.o. GB—A—1.169.137 and starting from this state of the art, it is the objective of the present invention to provide a baler with improved power efficiency, and which is operable to produce high density bales having good quality knots in the binding material thereof.

According to the present invention, the aforementioned conventional arrangement is supplemented with additional means for securing the timing between the tying cycle and the plunger movement in the direction to compress crop material in the bale case, this being particularly advantageous in arrangements where the tying cycle is completed during less than a complete reciprocating cycle of the plunger in as much as in such arrangements the tying cycle possibly could be triggered when the plunger is retracting in the bale case in the event that no precautions would be taken. This would disturb the tying operation completely.

Specifically, according to the present invention a baler is provided which comprises:

a bale case;

a plunger reciprocable in the bale case for compressing crop material into bales;

a tying mechanism including a knotter and a needle for tying a strand of binding material around a bale;

drive means for driving the plunger and the tying mechanism and including a clutch mechanism, said clutch mechanism comprising:

a first member which, in use of the baler, is rotated continuously and which carries a cam lobe;

a second member co-axial with the first member and drivingly coupled to the tying mechanism; and

a pawl assembly pivotally mounted on the second member and movable between a drive interrupting position outside the path of movement of the cam lobe and a drive engaging position in the path of movement of the cam lobe; the pawl assembly being rotatable in unison with the first member when in the drive engaging position and comprising an abutment tab;

bale length metering means; and

a first trip means operatively coupled to said bale length metering means and cooperable with the pawl assembly for maintaining said pawl assembly in said drive interrupting position until a bale of predetermined length is formed; the bale length metering means being operable, at this point, to retract the first trip means from within the path of the pawl assembly abutment tab to thereby trigger the clutching of the clutch mechanism.

The baler as identified above is characterized in that it further also comprises a second trip means which, as seen in the direction of rotation of the first clutch member, is positioned rearwardly of the first trip means and which is operatively associated with the plunger and equally is cooperable with the pawl assembly; said plunger, when moving in a direction to compress crop material in the bale case, being operable to move said second trip means from a first position within the path of movement of the pawl assembly abutment tab to a position outside said path and vice versa whereby, on the one hand, when the first trip means has tripped the clutching of the clutch mechanism and when the second trip means is in the first position, said second trip means is operable to move the pawl assembly back to its drive interrupting position to thereby neutralize the tripping of the first trip means and, on the other hand, when the first trip means has tripped the clutching of the clutch mechanism and when the second trip means is in the second position, the pawl assembly is permitted to stay in its drive engaging position; the arrangement being such that the second trip means is operable to time the operation of the tying mechanism with the movement of the plunger in said direction to compress crop material in the bale case.

The present invention advantageously can be used on all types of square balers, inclusive the so-called conventional or small rectangular balers. However, the present invention is particularly useful on so-called medium size and large square balers.

Fig. 1 is a side elevation view of a baler embodying the preferred embodiment of the present invention;

Fig. 2 is an enlarged view of a portion of the baler of Fig. 1;

Fig. 3 is a plan view of the portion of the baler shown in Fig. 2;

Fig. 4 is an enlarged sectional view taken along lines 4—4 in Fig. 3; and

Figs. 5 and 6 are views similar to Fig. 4 taken at various stages in the operation of the baler.

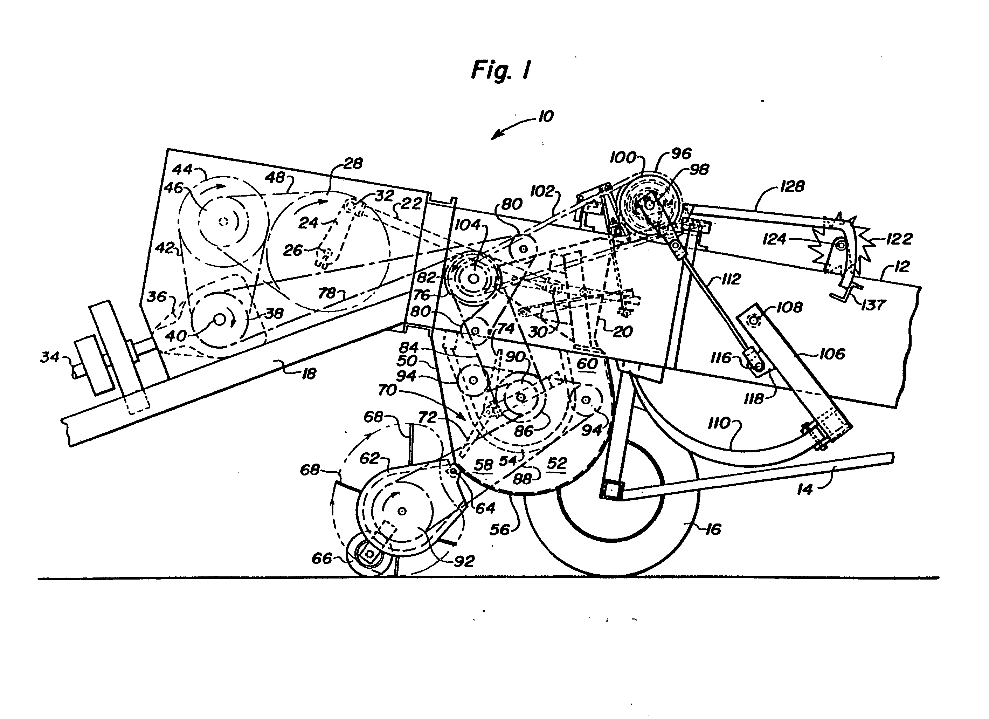

Referring to Fig. 1, a baler 10 includes a bale case 12 mounted on a frame 14 which is supported by wheels 16. A tongue 18 extends forwardly from the bale case 12 for attachment to a tractor (not shown). A plunger 20 is reciprocably disposed in the bale case 12 to form crop material into rectangular bales. The plunger 20 is attached by a connecting rod 22 to a crank arm 24 fixed to a shaft 26 on which a sprocket 28 is fixedly mounted. The connecting rod 22 has a pivotal connection 30 at one end with the plunger 20 and another pivotal connection 32 at the other end with the crank arm 24.

A drive shaft 34 is connected at one end to a gearbox 36 carried on the baler 10 and is adapted for connection at the other end to the PTO of a tractor (not shown). The drive shaft 34 causes clockwise rotation, as viewed in Fig. 1, of a double sprocket 38 which is fixed to the output shaft 40 of the gearbox 36. The double sprocket 38 is connected via a chain 42 to a sprocket 44 of larger diameter. A sprocket 46 is fixed to rotate with the sprocket 44. This arrangement of sprockets provides a speed reduction from the double sprocket 38 to the sprocket 46. A chain 48 connects the sprocket 46 to the sprocket 28 to cause clockwise rotation of the sprocket 28, as viewed in Fig. 1, in order to cause reciprocation of the plunger 20 in a fore-and-aft direction in the bale case 12.

A feed chamber 50 is mounted underneath the bale case 12 and includes a curved duct 52 having top and bottom walls 54 and 56, respectively, and sidewalls. The top wall 54 is formed of a series of curved channel members, of inverted generally U-shaped cross-section, which are arranged side-by-side so that there are slots defined between adjacent channel members. The bottom wall 56 is formed primarily of a single curved, continuous panel member. The curved duct 52 is open at its lower end 58 and at its upper end 60 and communicates at its upper end 60 with an inlet opening formed in the bottom wall of the bale case 12. A pickup device 62 of a conventional type is pivotally connected at 64 to the feed chamber 50 and is supported by wheels 66. The pickup device 62 includes a plurality of fingers 68 which are rotatable in the direction indicated in Fig. 1 for lifting crop material from the ground and delivering it toward the feed chamber 50.

A feeder mechanism 70 is provided in the feed chamber 50 for moving crop material toward the lower end 58 of the duct 52, then through the duct 52 from its lower end 58 to its upper end 60, and then into the bale case 12 through the inlet opening in the bottom wall thereof. The feeder mechanism 70 includes two sets of feeder elements or tines 72, 74 arranged to project through the slots in the top wall 54 of the duct 52.

The double sprocket 38 is connected to a sprocket 76 mounted on the side of the bale case 12 by a chain 78 in a backwrap manner to cause rotation of the sprocket 76 in a counterclockwise direction as indicated. The chain 78 also extends around idlers 80. Another sprocket 82 fixed to rotate with the sprocket 76 is connected by a chain 84 to a sprocket 86 to cause counterclockwise rotation of the sprocket 86 and thus operation of the feeder mechanism 70. A belt 88 extends around a sheave 90 that is connected to the sprocket 86 in a backwrap manner and around another sheave 92 on the pickup device 62 to rotate the sheave 92 in a clockwise direction and thus operate the pickup device 62. The belt 88 also extends around idlers 94, the forward one of which is preferably spring loaded to allow vertical movement of the pickup device 62 and to allow the belt 88 to slip if the pickup device 62 is overloaded.

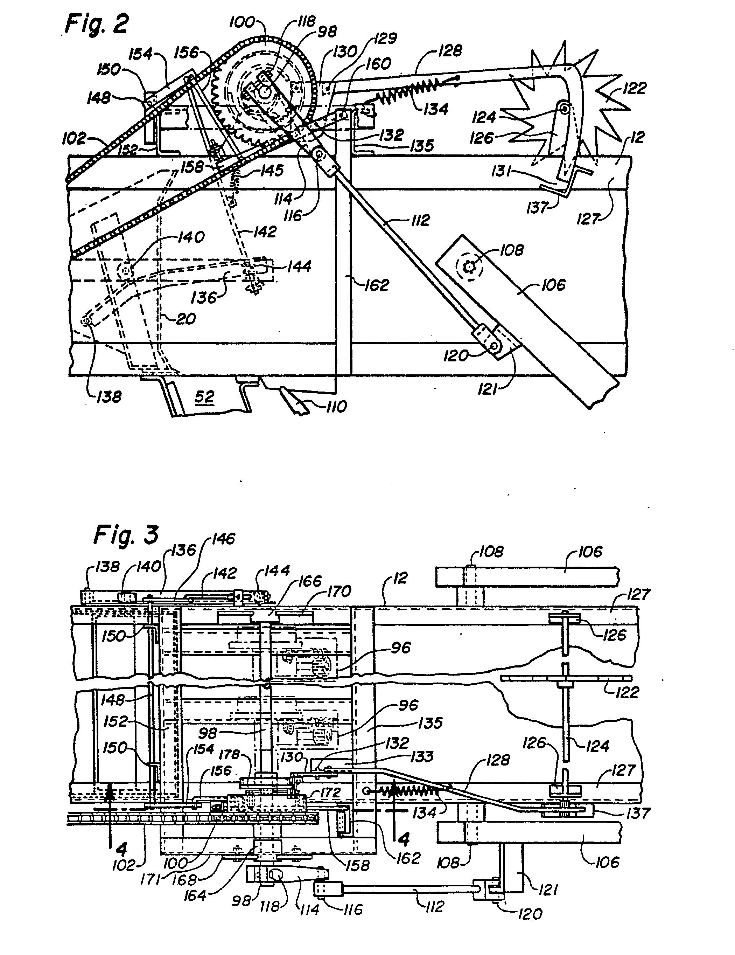

The baler 10 includes a system for tying several strands of twine around a completed bale. This system includes a plurality of conventional knotters 96 (two of which are partially shown in phantom in Fig. 3) mounted above the bale case 12. The knotters 96 are driven by a shaft 98 on which a sprocket 100 is rotated. A chain 102 extends around the sprocket 100 and another sprocket 104 that is connected to rotate with the sprockets 76 and 82. The various sprockets are sized so that the sprocket 100 rotates twice as fast as the sprocket 28. Accordingly, the knotters 96 and needles 110, when actuated as explained later, advantageously will be driven at twice the speed of the plunger crank arm 24. A yoke 106 is pivoted on stub shafts 108 carried on the sides of the bale case 12. The yoke 106 carries a plurality of twine needles 110 for delivering strands of twine to the knotter 96 which form knots therein. As also seen in Figs. 2 and 3, a link 112 is pivotally connected at one end to a crank arm 114 by a pin 116. The crank arm 114 is clamped to the shaft 98 by a bolt 118. The other end of the link 112 is pivotally connected by a pin 120 to a bracket 121 carried on the yoke 106. A tripping device for actuating the tying system includes a star wheel 122 fixed on a shaft 124 that is rotatably supported in brackets 126 mounted on the upper corner rails 127 of the bale case 12. The tripping device also includes an arm member 128 operatively coupled to the shaft 124 in a conventional manner, such as disclosed in US-A-2.897.748.

Referring now to Figs. 2 and 3, it will be seen that the arm member 128 has a plate 130 pivoted thereto at its forward end by a pin 129. The plate 130 is pivoted on a pin 132 carried on a frame member 133 of the bale case 12. A spring 134 is connected between the arm member 128 and a transverse beam 135 on the bale case 12 to urge the arm member 128 in a forward direction relative to the bale case 12. A ramp 136 is pivoted at one end on a pin 138 on the side of the bale case 12, and a roller 140 carried by the plunger 20 is positioned to roll along the upper surface of the ramp 136. A rod 142 extends through the other end of the ramp 136, and a spring 144 is disposed on the rod 142 underneath the upper surface of the ramp 136. A spring 145 is connected between rod 142 and the bale case 12. The rod 142 is connected at its upper end to a link 146 shown in Fig. 3, which is secured to a rod 148 that extends transversely above the bale case 12. The rod 148 is rotatably supported in brackets 150 attached to a transverse beam 152. Another link 154, shown in Figs. 2 and 3, is fixed to the rod 148 opposite the link 146. A rod 156 is connected at its upper end to the link 154 and at its lower end to a further link 158. The link 158 is pivoted by a pin 160 to a vertical beam 162. As seen best in Fig. 3, the shaft 98 is rotatably supported at its ends in bearings 164, 166 carried by brackets 168, 170. Bracket 168 is secured to a beam 171 extending between the transverse beams 135 and 152, and bracket 170 is secured to the bale case corner rail 127.

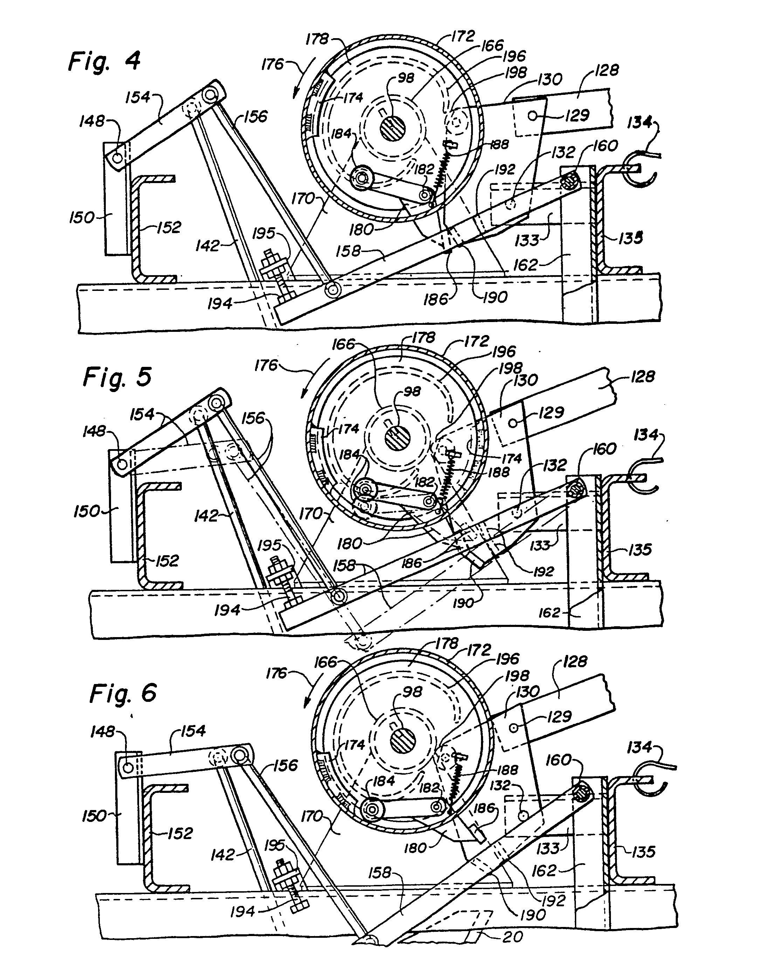

Referring to Fig. 4, a hub 172 shown in cross-section is bolted to the sprocket 100. The hub 172 has a cam lobe 174 welded to its inner surface, and the hub 172 is rotated in the direction indicated by the arrow 176. A disk 178 is keyed to the shaft 98 behind the hub 172 as also seen in Fig. 3. A pawl assembly 180 is pivoted at 182 on the disk 178, and carries a roller 184 at one end for engagement with the cam lobe 174 on the hub 172. The end of the pawl assembly 180 opposite the roller 184 is formed with a tab 186. A spring 188 is connected between the pawl assembly 180 and the disk 178 to urge the pawl assembly 180 in a counterclockwise direction about pivot 182 as viewed in Fig. 4. The plate 130 carries a tab 190 disposed to engage the tab 186 on the pawl assembly 180. The link 158 also carries a tab 192 for engagement with the pawl assembly tab 186.

In operating the baler 10, crop material is delivered into the bale case 12 by the feeder mechanism 70 where it is then compressed into bales by the plunger 20. As a bale is being formed, the arm 128 is in the position shown in Figs. 2 and 4 so that the tab 190 thereon engages the tab 186 on the pawl assembly 180. This holds the pawl assembly 180 in a position where the roller 184 is out of the path of movement of the cam lobe 174 on the hub 172 which is constantly rotated with the sprocket 100 in the direction indicated by the arrow 176. Therefore, the disk 178 and the shaft 98 are stationary and the knotters 96 are idle for the time being. Meanwhile, the reciprocating movement of the plunger 20 in the bale case 12 causes the roller 140 to roll back and forth along the upper surface of the ramp 136. When the plunger 20 is moved rearwardly in the bale case 12 past the phantom position shown in Fig. 2 to compress crop material, the roller 140 pushes the ramp 136 downwardly about the pin 138. The rod 142 is pulled downwardly by the ramp 136 thereby also pulling the link 146 downwardly and rotating the rod 148 in the brackets 150. The link 154 is pushed downwardly by the rod 148 thereby also pushing the rod 156 downwardly. The link 158 is pushed downwardly by the rod 156 to the position shown in Fig. 6 so that the tab 192 formed thereon is moved out of the way of the tab 186 on the pawl assembly 180. When the plunger 20 is subsequently moved forwardly in the bale case 12 in a retracting stroke toward the phantom position of Fig. 2, the roller 140 is disengaged from the upper surface of the ramp 136. This allows the ramp 136, the rods 142, 156 and the links 146, 154, 158 to return to the positions shown in Figs. 2 and 4 due to the spring 145. The link 158 engages a bolt 194 mounted in a bracket 195 on the bale case 12 to limit its upward movement. It should be understood that the link 158 is continuously oscillated between the positions of Fig. 4 and 6 during reciprocation of the plunger 20 in the bale case 12.

When a bale has reached the desired length, the starwheel 122 and the shaft 124 will have rotated far enough to cause the arm 128 to be pivoted upwardly about the pin 129 to a point where the slot 131, that is defined between the end of the arm 128 and a bracket 137 which is attached thereto, receives the shaft 124. The arm 128 is then moved forwardly with respect to the bale case 12 by the spring 134 thereby resulting in rotation of the plate 130 about the pin 132 to the position shown in Fig. 5 where the tab 190 on the plate 130 is out of engagement with the tab 186 on the pawl assembly 180. The spring 188 immediately urges the pawl assembly 180 to rotate in a counterclockwise direction about pivot 182. This tripping action usually occurs when the baler plunger 20 is approaching its maximum compaction position as at this point in the cycle a last charge of crop material is added to the bale under formation whereby the desired length of the bale is obtained. The hub 172 and the plunger 20 are synchronized in their respective movements in a manner such that, as the plunger 20 reaches its maximum compaction position, the leading edge of the cam lobe 174 just has moved past the roller 184, such that, when the trip mechanism is tripped upon the plunger 20 reaching said maximum compaction position, the pawl assembly 180 is pivoted in an anticlockwise direction around pivot 182 thus allowing the roller 184 to engage the inner surface of the cam lobe 174. Further rotation of the hub 172 in the direction 176 during the further movement of the plunger 20 allows the roller 184 to ride over the inner surface of the cam lobe 174 until it is allowed to "drop outwardly" and against the inner surface of the hub 172 behind the cam lobe 174. Consequently the roller 184 now is positioned in the path of movement of the cam lobe 174.

At this point in the cycle (i.e. when the plunger 20 is positioned in or close to its maximum compaction position) the link 158 with the tab 192 thereon is situated in the retracted position shown in phantom lines in Fig. 5, but soon returns to the full line position of said Figure during the plunger return movement in the manner as already explained above. Thereby the tab 192 on the link 158 takes up a position in the path of movement of the pawl assembly tab 186.

As the shaft 98 is driven at twice the rotational speed of the crank shaft 26, the cam lobe 174 approaches the pawl assembly 180 already again as the plunger is approaching its fully retracted position. However, at this point in the cycle the knotter mechanism may not be actuated as is generally known in the art of knotting mechanisms. This is accomplished by the mechanism comprising a.o. the ramp 136 and the link 158 supporting the tab 192 and operating in the manner as described hereafter.

As the cam lobe 174 engages the roller 184 of the pawl assembly 180 when the plunger 20 is moved toward its fully retracted position, the disk 178 and the shaft 98 supporting the latter are entrained via the pawl mechanism 180 with the hub 172 in the direction 176 until the pawl assembly tab 186 engages the tab 192 of the link 158 which, at that point in the cycle, is positioned in the path of movement of the pawl assembly 180; the tab 190 on the plate 130 being at that moment in the retracted position shown in full lines in Fig. 5. This causes the pawl assembly 180 to pivot opposite to the force of spring 188 in the clockwise direction around pivot 182 to the full line position of Fig. 5 whereby the coupling between the hub 172 and the disk 178 is disengaged again already after a very short angular displacement of the disk 178 and the shaft 98 carrying the latter. Consequently the shaft 98 is not rotated far enough to actuate the tying system. It will be appreciated that the tab 192 on the link 158 is positioned a short distance past the tab 190 on the plate 130 when seen in the direction of rotation 176 to allow said tab 192 on the link 158 to move in front of the pawl assembly tab 186 when the latter is released by the tab 190 on the plate 130. By the same token, it thus also will be realized that the shaft 98 and the disk 78 must be rotated a few degrees in order for the pawl assembly tab 186 to engage the tab 192 on the link 158. This slight rotation of the shaft 98 does not, however, cause any substantial movement of either the needles 110 or the knotters 96. The needles 110 and the knotters 96 remain inactive for now.

When the plunger 20 subsequently moves toward the end of its rearward or compacting stroke, the link 158 is pushed downwardly to the position shown in Fig. 6 moving the tab 192 thereon out of engagement with the pawl assembly tab 186. The spring 188 again urges the pawl assembly 180 to the position where the roller 184 is in the path of movement of the cam lobe 174. As the plunger 20 is approaching its maximum compaction position, the cam lobe 174 is moved a second time towards its coupling position. This time, the cam lobe 174 engages the roller 184 and remains in contact therewith for a full revolution of the disk 178. During this revolution of the disk 178 and the shaft 98 supporting the latter the tying system is actuated. That is, the needles 110 are moved through the bale case 12 to deliver twine to the knotters 96 which are driven to form knots in the twine.

The disk 178 carries a cam track 196 which engages a roller 198 on the plate 130 as the disk 178 is rotated. This serves to reset the arm 128 to the position shown in Fig. 2 after one complete (360°) revolution of the disk 178. The tab 190 on the plate 130 is returned to the position shown in Fig. 4 so that it re-engages the tab 186 on the pawl assembly 180. This returns the pawl assembly 180 to the position shown in Fig. 4 following a single revolution of the disk 178 and the shaft 98.

From what precedes it thus will be appreciated that, in accordance with an important aspect of the present invention, the tripping of the tying mechanism upon the bale reaching its desired length is made inoperative unless the plunger 20 is moving in a compacting stroke toward the end of its rearward movement or, in other words, the tying mechanism is actuated in synchronism with the plunger 20 approaching its maximum compression position so that the tying operation is advantageously completed when the plunger 20 holds the crop material to be baled in the bale chamber 12 in a compressed condition.

It will also be understood that according to another important aspect of the instant invention the tying mechanisms, i.e. the knotters 96 together with the needles 110, when actuated, are driven at twice the speed of the plunger 20. That is, the knotters 96 and the needles 110 each make one knot tying cycle while the plunger 20 makes one-half of a complete stroke (i.e. 180° rotation of the plunger crank arm 24), which is in contrast with prior art balers of which the knotters and needles make one knot tying cycle while the plunger makes a complete stroke (i.e. 360° rotation of the plunger crank arm). Of course, the knotter tripping mechanism according to the invention is synchronized with the plunger movement in such a manner that the knot tying operation is carried out when the plunger is moving through the rearward half of its path.

The relatively high speed of the knot tying mechanisms allows the knot tying cycle to be completed while the plunger 20 is still engaged with the bale or, in other words, while the bale is still under compression from the plunger 20. Therefore, twine will be tied around the bale before the bale has an opportunity to spring back, thereby resulting in the bale being of relatively high density, on the one hand and the baler being substantially more energy-efficient than prior art balers on the other hand. Furthermore, this relatively high speed of the tying mechanisms also results in better quality knots being made which better resist untying even under high bale density.

This relatively high speed of the knot tying mechanisms in comparison with the speed of the plunger 20 is responsible for the fact that the conventional trip mechanism comprising the starwheel 122, the arm 128, the tab 190 on the plate 130 and the pawl assembly 180 is no longer sufficient to maintain the necessary timing between the plunger movement and the knotter operation and which has necessitated the provision of the additional means according to the invention in the form of the mechanism comprising the roller 140 on the plunger 20, the ramp 136 and the link 158 with the tab 192 thereon to guarantee that said necessary timing be maintained.

The foregoing description illustrates preferred embodiments of the invention. However, concepts employed may, based upon such description, be employed in other embodiments without departing from the scope of the invention.

It e.g. will be obvious that the coupling mechanism between the plunger 20 and the tab 192 comprising, following the preferred embodiment of the invention, a fairly large number of components, may be arranged otherwise; the only requirement being that the additional trip means comprising the tab 192, are operable to neutralize the effect of the tripping of the tying mechanisms by the conventional trip mechanism including the starwheel 122 and the components coupled thereto, unless the plunger 20 is positioned close to its maximum compaction position and is moving further toward said position.

It also will be appreciated that the relative drive speed of the knot tying mechanisms as compared with the drive speed of the plunger 20 may differ from the one described as being the preferred relative drive speed. It indeed is possible to drive the knot tying mechanisms at an even higher relative speed, such as e.g. three times the plunger speed, so that the tying operation is completed during 120° of movement of the plunger crank arm 24, meaning that the tying is completed with the crop material in the bale case being in an even more compressed condition.

Alternatively, the knot tying mechanisms also may be driven at 1,5 times the plunger speed whereby the tying operation is completed during a 240° rotation of the plunger crank arm 24.

In all these alternative arrangements, the proper timing between the plunger movement and the knot tying operation is maintained by the additional trip means including a.o. the tab 192.

The same invention equally advantageously can be used on a wire tie mechanism as on a twine tie mechanism. In such a wire tie mechanism a wire twister replaces the knotter mechanism.

**Claims**

1. A baler (10) comprising:
a bale case (12);
a plunger (20) reciprocable in the bale case (12) for compressing crop material into bales;
a tying mechanism (96, 110) including a knotter (96) and a needle (110) for tying a strand of binding material around a bale;
drive means (22, 24, 26/102, 100, 172, 178, 98, 112) for driving the plunger (20) and the tying mechanism (96, 110) and including a clutch mechanism (172, 174, 180, 184, 186, 178); said clutch mechanism (172, 174, 180, 184, 186, 178) comprising:
a first member (172) which, in use of the baler (10), is rotated continuously and which carries a cam lobe (174);
a second member (178) co-axial with the first member (172) and drivingly coupled to the tying mechanism (96, 110); and
a pawl assembly (180, 184, 186) pivotally mounted on the second member (178) and movable between a drive interrupting position outside the path of movement of the cam lobe (174) and a drive engaging position in the path of movement of the cam lobe (174); the pawl assembly (180, 184, 186) being rotatable in unison with the first member (172) when in the drive engaging position and comprising an abutment tab (186);
bale length metering means (122); and
a first trip means (190) operatively coupled to said bale length metering means (122) and cooperable with the pawl assembly (180, 184, 186) for maintaining said pawl assembly (180, 184, 186) in said drive interrupting position until a bale of predetermined length is formed; the bale length metering means (122) being operable, at this point, to retract the first trip means (190) from within the path of the pawl assembly abutment tab (186) to thereby trigger the clutching of the clutch mechanism (172, 174, 180, 184, 186 178); and characterized in that
the baler (10) further also comprises a second trip means (192) which, as seen in the direction of rotation of the first clutch member (172), is positioned rearwardly of the first trip means (190) and which is operatively associated with the plunger (20) and equally is cooperable with the pawl assembly (180, 184, 186); said plunger (20), when moving in a direction to compress crop material in the bale case (12), being operable to move said second trip means (192) from a first position within the path of movement of the pawl assembly abutment tab (186) to a position outside said path and vice versa whereby, on the one hand, when the first trip means (190) has tripped the clutching of the clutch mechanism (172, 174, 180, 184, 186, 178) and when the second trip means (192) is in the first position, said second trip means (192) is operable to move the pawl assembly (180, 184, 186) back to its drive interrupting position to thereby neutralize the tripping of the first trip means (190) and, on the other hand, when the first trip means (190) has tripped the clutching of the clutch mechanism (172, 174, 180, 184, 186, 178) and when the second trip means (192) is in the second position, the pawl assembly (180, 184, 186) is permitted to stay in its drive engaging position; the arrangement being such that the second trip means (192) is operable to time the operation of the tying mechanism (96, 110) with the movement of the plunger (20) in said direction to compress crop material in the bale case (12).

2. A baler (10) according to claim 1 wherein the drive means (22, 24, 26/102, 100, 172, 178, 98, 112) comprise a crank arm (24) drivingly coupled to the plunger (20) and a tying mechanism drive shaft (98) drivingly coupled to the knotter (96) and the needle (110) and characterized in that the rotational speed of the tying mechanism drive shaft (98) exceeds the rotational speed of the plunger crank arm (24) whereby, in use of the baler (10), the tying operation is completed during less than a full reciprocating cycle of the plunger (20).

3. A baler (10) according to claim 2, characterized in that the tying mechanism drive shaft (98) is rotated at twice the rotational speed of the plunger crank arm (24) whereby the tying operation is completed during the plunger (20) making one half of a full reciprocating cycle.

4. A baler (10) according to claim 2, characterized in that the tying mechanism drive shaft (98) is rotated at three times the rotational speed of the plunger crank arm (24) whereby the tying operation is completed during the plunger (20) making one third of a full reciprocating cycle.

5. A baler (10) according to claim 2, characterized in that the tying mechanism drive shaft (98) is rotated at one-and-a-half times the rotational speed of the plunger crank arm (24) whereby the tying operation is completed during the plunger (20) making two thirds of a full reciprocating cycle.

6. A baler (10) according to any of the preceding claims, characterized in that the position of the second trip means (192) is controlled by a ramp (136) movably mounted on the bale case (12) and a roller (140) carried on the plunger (20) for contacting the ramp (136).

7. A baler (10) according to claim 6, characterized in that the second trip means is in the form of an abutment tab (192) connected to a link (158) which itself is operatively connected to the ramp (136); said abutment tab (192) being engageable with the pawl assembly abutment tab (186).

8. A baler (10) according to claim 7, characterized in that the link (158) and the ramp (136) each are pivotally mounted on the bale case (12) for upward and downward movement and spring means (145) are provided for normally urging the link (158) upwardly into a position where the abutment tab of the second trip means (192) is disposed to prevent operation of the tying mechanism (96, 110).

9. A baler (10) according to claim 8, characterized in that means (194) are provided on the bale case (12) for engagement with the link (158) to limit its upward movement.

10. A baler (10) according to any of the preceding claims, characterized in that the second trip means (192) is independent from the first trip means (190).

**Patentansprüche**

1. Ballenpresse (10) mit:
einer Preßkammer (12),
einem Preßkolben (20), der in der Preßkammer (12) hin- und herbewegbar ist, um Erntematerial zu Ballen zusammenzupressen,
einem Bindemechanismus (96, 110), der einen Knüpfer (96) und eine Nadel (110) zum Binden eines Stranges von Bindematerial um einen Ballen einschließt,
Antriebseinrichtungen (22, 24, 26/102, 100, 172, 178, 98, 112) zum Antrieb des Preßkolbens (20) und des Bindemechanismus (96, 110), wobei die Antriebseinrichtungen einen Kupplungsmechanismus (172, 174, 180, 184, 186, 178) einschließen, der folgende Teile umfaßt:
ein erstes Bauteil (172), das im Betrieb der Ballenpresse (10) kontinuierlich in Drehung versetzt wird und einen Nockenbuckel (174) trägt,
ein zweites zu dem ersten Bauteil (172) koaxiales Bauteil (178), das antriebsmäßig mit dem Bindemechanismus (96, 110) gekoppelt ist, und
eine Klinkenbaugruppe (180, 184, 186), die schwenkbar auf dem zweiten Bauteil (178) befestigt und zwischen einer Antriebsunterbrechungsposition außerhalb der Bewegungsbahn des Nockenbuckels (174) und einer Antriebseingriffsposition in der Bewegungsbahn des Nockenbuckels (174) bewegbar ist, wobei die Klinkenbaugruppe (180, 184, 186) in der Antriebseingriffsposition zusammen mit dem ersten Bauteil (172) drehbar ist und eine Anschlaglasche (186) aufweist,
Ballenlängen-Meßeinrichtungen (122), und
eine erste Auslöseeinrichtung (199), die betriebsmäßig mit der Ballenlängen-Meßeinrichtung (122) gekoppelt ist und mit der Klinkenbaugruppe (180, 184, 186) zusammenwirken kann, um die Klinkenbaugruppe (180, 184, 186) in der Antriebsunterbrechungsposition zu halten, bis ein Ballen vorgegebener Länge gebildet wurde, wobei die Ballenlängen-Meßeinrichtung (122) zu diesem Punkt betätigbar ist, um die ersten Auslöseeinrichtungen (190) aus der Bewegungsbahn der Klinkenbaugruppen-Anschlaglasche (186) herauszuziehen, um damit die Einkupplung des Kupplungsmechanismus (172, 174, 180, 184, 186, 178) auszulösen, dadurch gekennzeichnet, daß die Ballenpresse weiterhin eine zweite Auslöseeinrichtung (192) aufweist, die bei Betrachtung in der Drehrichtung des ersten Kupplungsbauteils (172) hinter der ersten Auslöseeinrichtung (190) angeordnet und betriebsmäßig mit dem Preßkolben (20) verbunden ist und die ebenfalls mit der Klinkenbaugruppe (180, 184, 186) zusammenwirken kann, daß der Preßkolben bei einer Bewegung in einer Richtung zur Zusammenpressung von Erntematerial in der Preßkammer (12) betätigbar ist, um die zweite Auslöseeinrichtung (192) aus der ersten Position in der Bewegungsbahn der Anschlaglasche (186) der Klinkenbaugruppe auf eine Position außerhalb dieser Bewegungsbahn und umgekehrt zu bewegen, wodurch einerseits, wenn die erste Auslöseeinrichtung (190) das Kuppeln des Kupplungsmechanismus (172, 174, 180, 178) ausgelöst hat und wenn sich die zweite Auslöseeinrichtung (192) in der ersten Position befindet, die zweite Auslöseeinrichtung (192) betätigbar ist, um die Klinkenbaugruppe (180, 184, 186) zurück in ihre Antriebsunterbrechungsposition zu bewegen, um auf diese Weise die Auslösung der ersten Auslöseeinrichtungen (190) zu neutralisieren, während andererseits, wenn die erste Auslöseeinrichtung (190) das Kuppeln des Kupplungsmechanismus (172, 174, 180, 184, 186, 178) ausgelöst hat und wenn sich die zweite Auslöseeinrichtung (192) in der zweiten Position befindet, die Klinkenbaugruppe (180, 184, 186) in ihrer Antriebseingriffsposition verbleiben kann, wobei die Anordnung derart ist, daß die zweite Auslöseeinrichtung (192) zur zeitlichen Steuerung der Betriebsweise des Bindemechanismus (96, 102) mit der Bewegung des preßkolbens (20) in der Richtung zur Zusammendrückung von Erntematerial in der Preßkammer (12) betätigbar ist.

2. Ballenpresse (10) nach Anspruch 1, bei der die Antriebseinrichtungen (22, 24, 26)/102, 100, 172, 178, 98, 112) einen antriebsmäßig mit dem Preßkolben (20) gekoppelten Kurbelarm (24) und eine Bindemechanismus-Antriebswelle (98) umfassen, die antriebsmäßig mit dem Knüpfer (96) und der Nadel (110) gekoppelt ist, dadurch gekennzeichnet, daß die Drehgeschwindigkeit der Bindemechanismus-Antriebswelle (98) die Drehgeschwindigkeit des Kurbelarms (24) des Preßkolbens übersteigt, sodaß im Betrieb der Ballenpresse (10) der Bindevorgang während weniger als einem vollen Hin- un Herbewegungszyklus des Preßkolbens (20) vervollständigt wird.

3. Ballenpresse (10) nach Anspruch 2, dadurch gekennzeichnet, daß die Antriebswelle (98) des Bindemechanismus mit der doppelten Drehgeschwindigkeit des Kurbelarms (24) des Preßkolbens gedreht wird, sodaß der Bindevorgang vervollständigt wird, während der Preßkolben (20) eine Hälfte eines vollständigen Hin- und Herbewegungszyklus ausführt.

4. Ballenpresse (10) nach Anspruch 2, dadurch gekennzeichnet, daß die Antriebswelle (98) des Bindemechanismus mit der dreifachen Drehgeschwindigkeit des Kurbelarms (24) des Preßkolbens gedreht wird, sodaß der Bindevorgang während eines Drittels eines vollen Hin- und Herbewegungszyklus des Preßkolbens (20) vervollständigt wird.

5. Ballenpresse (10) nach Anspruch 2, dadurch gekennzeichnet, daß die Antriebswelle (98) des Bindemechanismus mit der eineinhalbfachen Drehgeschwindigkeit des Kurbelarmes (24) des Preßkolbens gedreht wird, sodaß der Bindevorgang während zwei Dritteln eines vollen Hin- und Herbewegungszyklus des Preßkolbens (20) vervollständigt wird.

6. Ballenpresse (10) nach einem der vorhergehenden Ansprüche, dadurch gekennzeichnet, daß die Position der zweiten Auslöseeinrichtung (192) durch eine beweglich auf der Preßkammer (12) befestigten Rampe (136) und eine Rolle (140) gesteuert ist, die an dem Preßkolben (20) zur Berührung mit der Rampe (136) gehaltert ist.

7. Ballenpresse (10) nach Anspruch 6, dadurch gekennzeichnet, daß die zweite Auslöseeinrichtung die Form einer Anschlaglasche (192) aufweist, die mit einem Gestänge (158) verbunden ist, das seinerseits betriebsmäßig mit der Rampe (136) verbunden ist, und daß die Anschlaglasche (192) mit der Anschlaglasche (186) der Klinkenbaugruppe in Eingriff bringbar ist.

8. Ballenpresse (10) nach Anspruch 7, dadurch gekennzeichnet, daß das Gestänge (158) und die Rampe (136) jeweils schwenkbar auf der Preßkammer (12) für eine nach oben und nach unten gerichtete Bewegung befestigt sind, und daß Federelemente (145) vorgesehen sind, die normalerweise das Gestänge (158) nach oben in eine Position vorspannen, in der die Anschlaglasche der zweiten Auslöseeinrichtung (192) derart angeordnet ist, daß ein Betrieb des Bindemechanismus (96, 110) verhindert ist.

9. Ballenpresse (10) nach Anspruch 8, dadurch gekennzeichnet, daß Einrichtungen (194) auf der Preßkammer (12) für einen Eingriff mit dem Gestänge (158) vorgesehen sind, um dessen nach oben gerichtete Bewegung zu begrenzen.

10. Ballenpresse (10) nach einem der vorhergehenden Ansprüche, dadurch gekennzeichnet, daß die zweite Auslöseeinrichtung (192) unabhängig von der ersten Auslöseeinrichtung (190) ist.

**Revendications**

1. Ramasseuse-presse (10) comportant:
une cage à balles (12);
un piston (20) capable d'opérer un mouvement de va-et-vient dans la cage à balles (12) pour comprimer des produits de récolte sous la forme de balles;
un mécanisme d'attache (96, 110) comprenant un noueur (96) et une aiguille (110) pour attacher un brin de matière à lier autour d'une balle;
des moyens d'entraînement (22, 24, 26/102, 100, 172, 178, 98, 112) destinés à entraîner le piston (20) et le mécanisme d'attache (96, 110) et comprenant un mécanisme d'embrayage (172, 174, 180, 184, 186, 178); ledit mécanisme d'embrayage (172, 174, 180, 184, 186, 178) comportant:
un premier organe (172) animé d'un mouvement de rotation continu, lorsque la ramasseuse-presse (10) est en service, et qui porte un bossage de came (174);

un second organe (178) coaxial avec le premier organe (172) et accouplé dans une relation d'entraînement avec le mécanisme d'attache (96, 110); et
un ensemble à cliquet (180, 184, 186) monté pivotant sur le second organe (178) et mobile entre une position d'interruption d'entraînement située à l'extérieur de la trajectoire de déplacement du bossage de came (174), et une position d'accouplement d'entraînement située dans la trajectoire de déplacement du bossage de came (174); l'ensemble à cliquet (180, 184, 186) étant, lorsqu'il se trouve dans la position d'accouplement d'entraînement, apte à tourner en synchronisme avec le premier organe (172), et comportant une patte de butée (186);
des moyens mesureurs de longueur de balle (122); et
un premier moyen de déclenchement (190) accouplé d'une manière fonctionnelle avec lesdits moyens mesureurs de longueur de balle (122) et apte à coopérer avec l'ensemble à cliquet (180, 184, 186) pour maintenir celuici dans ladite position d'interruption d'entraînement, jusqu'à ce qu'une balle d'une longueur prédéterminée soit formée; les moyens mesureurs de longueur de balle (122) étant aptes à opérer pour, à ce moment là, rétracter le premier moyen de déclenchement (190) hors de la trajectoire de la patte de butée d'ensemble à cliquet (186), pour ainsi amorcer l'embrayage du mécanisme d'embrayage (172, 174, 180, 184, 186, 178); et caractérisée en ce que
la ramasseuse-presse (10) comporte, en outre, un second moyen de déclenchement (192) qui, lorsqu'on le considère dans le sens de rotation du premier organe d'embrayage (172), est positionné à l'arrière du premier moyen de déclenchement (190) en étant associé d'une manière fonctionnelle au piston (20), et également apte à coopérer avec l'ensemble à cliquet (180, 184, 186); ledit piston (20) étant, lorsqu'il se déplace dans une direction propre à comprimer des produits de récolte dans la cage à balles (12), capable d'agir pour déplacer ledit second moyen de déclenchement (192) d'une première position située à l'intérieur de la trajectoire de déplacement de la patte de butée d'ensemble à cliquet (186), dans une position située à l'extérieur de ladite trajectoire et vice versa, moyennant quoi, d'une part, lorsque le premier moyen de déclenchement (190) a déclenché l'embrayage du mécanisme d'embrayage (172, 174, 180, 178) et que le second moyen de déclenchement (192) est dans la première position, ce dernier est apte à opérer pour ramener l'ensemble à cliquet (180, 184, 186) dans sa position d'interruption d'entraînement, pour ainsi neutraliser le déclenchement du premier moyen de déclenchement (190), et, d'autre part, lorsque le premier moyen de déclenchement (190) a déclenché l'embrayage du mécanisme d'embrayage (172, 174, 180, 184, 186, 178) et que le second moyen de déclenchement (192) est dans la seconde position, l'ensemble à cliquet (180, 184, 186) peut rester dans sa position d'accouplement d'entraînement; la conception étant telle que le second moyen de déclenchement (192) est apte à opérer pour synchroniser le fonctionnement du mécanisme d'attache (96, 110) avec le déplacement du piston (20) dans ladite direction de nature à comprimer des produits de récolte dans la cage à balles (12).

2. Ramasseuse-presse (10) selon la revendication 1, dans laquelle les moyens d'entraînement (22, 24, 26/102, 100, 172, 178, 98, 112) comportent un bras de manivelle (24) accouplé dans une relation d'entraînement avec le piston (20), et un arbre d'entraînement de mécanisme d'attache (98) accouplé dans une relation d'entraînement avec le noueur (96) et l'aiguille (110), et caractérisée en ce que la vitesse de rotation de l'arbre d'entraînement de mécanisme d'attache (98) est supérieure à la vitesse de rotation du bras de manivelle de piston (24), moyennant quoi, lorsque la ramasseuse-presse (10) est en service, l'opération d'attache est exécutée en un temps inférieur à la durée d'un cycle de va-et-vient complet du piston (20).

3. Ramasseuse-presse (10) selon la revendication 2, caractérisée en ce que l'arbre d'entraînement de mécanisme d'attache (98) est animé d'un mouvement de rotation à une vitesse deux fois supérieure à la vitesse de rotation du bras de manivelle de piston (24), moyennant quoi, l'opération d'attache est exécutée pendant que le piston (20) effectue une moitié de son cycle de va-et-vient complet.

4. Ramasseuse-presse (10) selon la revendication 2, caractérisée en ce que l'arbre d'entraînement de mécanisme d'attache (98) est animé d'un mouvement de rotation à une vitesse trois fois supérieure à la vitesse de rotation du bras de manivelle de piston (24), moyennant quoi, l'opération d'attache est exécutée pendant que le piston (20) effectue un tiers de son cycle de va-et-vient complet.

5. Ramasseuse-presse (10) selon la revendication 2, caractérisée en ce que l'arbre d'entraînement de mécanisme d'attache (98) est animé d'un mouvement de rotation à une vitesse une fois et demi supérieure à la vitesse de rotation du bras de manivelle de piston (24), moyennant quoi, l'opération d'attache est exécutée pendant que le piston (20) effectue deux tiers de son cycle de va-et-vient complet.

6. Ramasseuse-presse (10) selon l'une quelconque des revendications précédentes, caractérisée en ce que la position du second moyen de déclenchement (192) est commandée par une rampe (136) montée mobile sur la cage à balles (12) et un galet (140) monté sur le piston (20) pour venir en contact avec la rampe (136).

7. Ramasseuse-presse (10) selon la revendication 6, caractérisée en ce que le second moyen de déclenchement se présente sous la forme d'une patte de butée (192) reliée à une pièce de liaison (158) elle-même accouplée d'une manière fonctionnelle avec la rampe (136); ladite patte de butée (192) étant apte à venir en prise avec la patte de butée de l'ensemble à cliquet (186).

8. Ramasseuse-presse (10) selon la revendication 7, caractérisée en ce que la pièce de liaison (158) et la rampe (136) sont respectivement montées pivotantes sur la cage à balles (12), en vue d'un déplacement vers le haut et vers le bas, des moyens élastiques (145) étant prévus pour normalement solliciter la pièce de liaison (158) vers le haut, jusque dans une position où la patte de butée du second moyen de déclenchement (192) est disposée pour empêcher un fonctionnement du mécanisme d'attache (96, 110).

9. Ramasseuse-presse (10) selon la revendication 8, caractérisée en ce qu'il est prévu, sur la cage à balles (12), des moyens (194) destinés venir en prise avec la pièce de liaison (158) pour limiter son déplacement vers le haut.

10. Ramasseuse-presse (10) selon l'une quelconque des revendications précédentes, caractérisée en ce que le second moyen de déclenchement (192) est indépendant du premiermoyen de déclenchement (190).

*Fig. 1*

EP 0 158 404 B1

Fig. 2

Fig. 3

Fig. 4

Fig. 5

Fig. 6